# EUROPÄISCHE PATENTSCHRIFT

(11) **EP 2 606 789 B1**
(45) Veröffentlichungstag und Bekanntmachung des Hinweises auf die Patenterteilung: **04.10.2017**
(21) Anmeldenummer: 12197260.8
(22) Anmeldetag: 14.12.2012
(51) Int. Cl.: A47J 37/06

(54) **Grillsystem zum aufflammfreien Grillen**
Grilling system for grilling without flames
Système de grill pour grillades sans flammes

(30) Priorität: 22.12.2011 DE 102011089663
(43) Veröffentlichungstag der Anmeldung: 26.06.2013
(73) Patentinhaber: Zhang, Jiulai, 6600 Reutte (AT)
(72) Erfinder: Zhang, Jiulai, 6600 Reutte (AT)
(74) Vertreter: Isarpatent

(56) Entgegenhaltungen:
- WO-A1-2012/025338
- DE-A1- 2 402 254
- DE-A1- 2 427 678
- US-A- 5 968 387

## Beschreibung

### Gebiet der Erfindung

Die Erfindung betrifft ein Grillsystem zur Auflage auf einen Grillrost zum aufflammfreien Grillen.

### Hintergrund der Erfindung

Bei mit Holzkohle befeuerten Grills können gesundheitsschädliche Stoffe aus der Glut und dem hineingetropften Fett ins Grillgut übergehen. Die entstehenden polyzyklischen aromatischen Kohlenwasserstoffe wie Benzopyren gelten als krebserregend. Weiterhin erschwert die Feuerbildung das Grillen. Bei mit Gas oder Strom beheizten Grills besteht ein ähnliches Problem.

Um das Problem zu lösen, gibt es unterschiedliche Ansätze, beispielsweise das Vorsehen seitlicher oder indirekter Heizungen, sowie die Ergänzung von Rinnen/Rillen unterhalb der Roststäbe. Relevante Schriften diesbezüglich sind EP 1631178 A1, WO 2004/107942, US 3,369,481, US 3,664,256, US 3,719,507, DE 391 98 18 A1, DE 298 10 644 U1, DE 296 08 205, DE 200 12 058 U1, DE 103 26 271 A1 oder DE 362 01 03. Die seitliche Heizung erschwert jedoch die Handhabung sehr stark. Bei indirekter Heizung ist stets ein Deckel erforderlich und die Garzeit beträgt länger. Im Übrigen ist die Farbe des Grillgutes nach indirektem Grillen zu hell. Deshalb ist normalerweise ein kurzes Nachgrillen mit direkter Heizung nötig. Ein Ersetzen der Rundstäbe durch z.B. V-Profile mit einer leichten Neigung, wie z.B. in DE 792 30 24 beschrieben, führt nicht den gewünschten Effekt herbei. Die Flüssigkeit aus dem Grillgut, welches zwischen den Profilen liegt, fließt nicht in die Rillen, sondern entlang der Außenoberfläche zur Unterseite der Profile und tropft von dort in die Glut. Deshalb ist eine zweite Rinne/Rille unter jedem Profil, wie in WO 2005/112719 A1 beschrieben, erforderlich. Jedoch beschränkt die relativ komplizierte Bauweise eine breite Anwendung.

Es hat sich wie in DE 299 03 212 U1 sowie DE 100 33 294 A1 beschrieben als vorteilhaft erwiesen, dass das Fett entlang der Unterseite des Rostes abfließen kann, wenn der Rost ein Gefälle aufweist. Dies beruht auf dem Prinzip der Benetzungskraft zwischen dem Fett und dem Rost. Das Gebrauchsmuster DE 299 03 212 U1 offenbart einen Grill mit einem geneigten Grillkörper, wobei auch Lösungen mit Gelenk beansprucht werden. Diese Lösungen sind kompliziert und bedingen hohe Kosten bei der Fertigung. Die Offenlegungsschrift DE 100 33 294 A1 beschreibt einen Rost mit einer Ummantelung für jeden Stab des Rostes. Diese Konstruktion ist ebenfalls kostenintensiv. Im Übrigen ist bei dieser Bauweise ein rauchfreies Grillen gewährleistet, wenn die Mantelblechdicke nicht ausreichend groß genug ist, um eine ausreichende Benetzungskraft zu gewährleisten. DE 240 22 54 A1 offenbart einen tropffreien Grillrost. Außer parallelen Längsstäben sind noch Querstäbe vorhanden, so dass ein netzartiger Rost gebildet wird. Dies erhöht sowohl Kosten als Gewicht. Öl wird durch eine Rinne in einem Ölbehälter weitergeleitet. Dies erschwert das Einbringen des Rostes auf einem Grillkörper und erhöht die Kosten. DE 197 169 72 A1 offenbart einen Grill, der eine Fettsammelneigung und ein Fetttransportneigung aufweist. Diese Lösung ist jedoch zu kompliziert.

Die Patentanmeldung DE 102 010 039 695 offenbart schräge Grillroste, welche eine Benetzungskraft/Adhäsionskraft benutzen, um ein rauchfreies Grillen zu erzielen. Die Technologie bietet Anpassungslösungen eines schrägen Grillrostes für herkömmliche Grills wie z.B. Kugelgrills, Rundgrills, Säulengrills, Trichtergrills, Grillwagen, Schwenkgrills, Feuerstellen, Gartengrillkamine, usw. Für eine Nachrüstung von bestehenden Grills muss für jedes Modell jedoch ein entsprechender Grillrost konstruiert werden.

### Aufgabe der Erfindung

Es ist Aufgabe der Erfindung, ein universales Grillsystem zur Auflage auf einem Grillrost vorzusehen, welches ein aufflammfreies Grillen ermöglicht und für die Nachrüstung von bestehenden Grills geeignet ist.

### Lösung der Aufgabe

Die Aufgabe wird durch die Merkmale des unabhängigen Anspruchs, gelöst. Bevorzugte Weiterbildungen der Erfindung sind Gegenstand der abhängigen Ansprüche.

Die Erfindung gibt daher ein Grillsystem zur Auflage auf einem waagerechten Grillrost eines Grills an. Das Grillsystem weist hierfür eine erste und eine zweite Grillgutauflagefläche auf, wobei die erste Grillgutauflagefläche und die zweite Grillgutauflagefläche keine Rinne aufweisen und mit einem Winkel von 120°-170° miteinander verbunden sind, sowie die Grillgutauflageflächen bei Einbringung auf den waagerechten Grillrost mit einer waagerechten Aufsetzfläche jeweils eine Neigung von 5-30° relativ zur Horizontalen aufweisen und mit zumindest jeweils einem Stützelement verbunden sind.

Durch die Auflage auf den Grillrost ist das Grillsystem im Gegensatz zu Systemen, die eine vorgesehene Aufsetzstelle benötigen, bei einer Vielzahl von Grills, unabhängig von der Form des Grillrostes einsetzbar.

Die Anwendung von zwei Grillgutauflageflächen im Gegensatz zu einer Grillgutauflagefläche reduziert den Höhenunterschied zwischen einem Ende und dem anderen Ende einer Grillgutauflagefläche. Ebenfalls wird damit der Temperaturunterschied reduziert. Dass die zwei Grillgutauflageflächen ein Dach bilden, weist ferner den Vorteil einer gleichmäßigeren Temperaturverteilung auf.

Gemäß der Erfindung weisen die erste und zweite Grillgutauflagefläche keine Rinne auf. Sie können aus einer Mehrzahl von Rundstäben hergestellt werden. Die erste und zweite Grillgutauflagefläche kann auch aus einem einteiligen oder zweiteiligen Lochblech, Gusseisen mit Öffnungen oder Drahtgitter hergestellt werden. Sie haben gegenüber Grillgutauflageflächen mit Rinne, z.B. einer Grillauflagefläche mit einer Mehrzahl von V oder U-Profilen den Vorteil einer schnelleren Garung aufgrund des fehlenden Abschirmungseffekts von V- oder U-Profilen und einer einfachen Reinigung.

Der Winkel zwischen der zwei Grillgutauflageflächen von 120°-170° gewährleistet eine Neigung jeder Grillgutauflagefläche zu Horizontale von 5°-30° bei Auflage des Grillsystems auf einem waagerechten Grillrost. Bei zu geringer Neigung wird die Flüssigkeit in die Glut abtropfen bevor sie das distale Ende der Grillgutauflagefläche erreicht. Bei zu großer Neigung ist die Rutschgefahr von Grillgut zu groß.

Das Grillsystem weist des Weiteren einen ersten Flüssigkeitssammelbehälter zur Aufnahme von Flüssigkeit, die über die erste Grillgutauflagefläche abgeschieden wird, sowie einen zweiten Flüssigkeitssammelbehälter zur Aufnahme von Flüssigkeit, die über die zweite Grillgutauflagefläche abgeschieden wird, auf, wobei das zumindest jeweils eine Stützelement die Grillgutauflageflächen abstützt. Durch die gegenüber dem Grillrost erhöhte Position der Grillgutauflageflächen können die jeweiligen Flüssigkeitssammelbehälter an geeigneter Stelle unter den Grillgutauflageflächen angeordnet werden. Das Vorsehen der Stützelemente an den Grifigutauflageflächen schafft somit den erforderlichen Platz zur Anordnung der Flüssigkeitssammelbehälter unter den Grillgutauflageflächen.

Gemäß einer vorteilhaften Weiterbildung der Erfindung ist vorgesehen, dass die Auflage auf dem Grillrost durch den ersten und zweiten Flüssigkeitssammelbehälter erfolgt. Aufgrund dessen, dass eine zusätzliche Auflagefläche nicht erforderlich ist, kann das Grillsystem platzsparend auf dem Grillrost angeordnet werden.

In vorteilhafter Weise ist vorgesehen, dass die Auflage auf dem Grillrost durch das zumindest jeweils eine Stützelement sowie den ersten und zweiten Flüssigkeitssammelbehälter erfolgt. Die jeweiligen Flüssigkeitssammelbehälter können somit neben den jeweiligen Stützelementen auf dem Grillrost angeordnet werden.

Vorzugsweise ist das zumindest jeweils ein Stützelement in dem jeweiligen Flüssigkeitssammelbehälter angeordnet. Dadurch kann Flüssigkeit aus dem Grillgut an einem distalen Ende der jeweiligen Grillgutauflagefläche entlang dem zumindest jeweils einem Stützelement in den jeweiligen Flüssigkeitssammeibehälter fließen.

In vorteilhafter Weise ist vorgesehen, dass die Verbindung zwischen dem jeweiligen Stützelement und dem jeweiligen Flüssigkeitssammelbehälter lösbar ist. Die Flüssigkeitssammelbehälter können somit auch fixiert werden, wenn die Grillgutauflageflächen an dem Grillrost fixiert werden.

Vorzugsweise weist die erste und zweite Grillgutauflagefläche jeweils einen Flüssigkeitsabscheider zum Abtropfen von Flüssigkeit in den jeweiligen Flüssigkeitssammelbehälter auf, wobei der Flüssigkeitsabscheider durch einen Vorsprung an einer Unterseite der jeweiligen Grillgutauflagefläche ausgebildet ist. Die Flüssigkeit tropft somit an dem Flüssigkeitsabscheider in den Flüssigkeitssammelbehälter ab. Das Vorhandensein eines solchen künstlichen Flüssigkeitsabscheiders ermöglicht zudem eine flexiblere Positionierung der jeweiligen Flüssigkeitssammelbehälter. Bei einem Grillsystem ohne künstlichen Flüssigkeitsabscheider tropft die Flüssigkeit an den distalen Enden der Grillgutauflageflächen in die darunter liegenden Flüssigkeitssammelbehälter ab. Die Enden der Grillgutauflageflächen sind somit natürlicher Flüssigkeitsabscheider.

In vorteilhafter Weise ist des Weiteren vorgesehen, dass die erste und zweite Grillgutauflagefläche jeweils einen Flüssigkeitsabscheider zum Abtropfen von Flüssigkeit in den jeweiligen Flüssigkeitssammelbehälter aufweisen, wobei der Flüssigkeitsabscheider an der Verbindungsstelle zwischen Grillgutauflagefläche und Stützelement durch Vorsehen des Stützelementes mit einer Neigung relativ zur Horizontalen ausgebildet ist. Die Verbindungsstelle zwischen Grillgutauflagefläche und Stützelement ist somit ein natürlicher Flüssigkeitsabscheider.

Gemäß der Erfindung ist vorgesehen, dass die Neigung der jeweiligen Grillgutauflagefläche relativ zur Horizontalen einen Winkel von 5-30° aufweist. Dadurch wird eine optimale Temperaturverteilung des Grillguts bei vorteilhafter Ausnutzung des Ablaufens von Grillflüssigkeit über die Grillgutauflageflächen erreicht.

In vorteilhafter Weise ist des Weiteren vorgesehen, dass die erste und zweite Grillgutauflagefläche jeweils an einem distalen Ende sowie einem seitlichen Abschnitt eine Schutzeinrichtung zur Vermeidung eines Fallens von Grillgut aufweisen. Das Grillgut kann somit sicher auf den Grillgutauflageflächen gehalten und vor einem Abrutschen in distaler sowie seitlicher Richtung geschützt werden.

Vorzugsweise ist des Weiteren vorgesehen, dass das Grillsystem am Grillrost eines Grills mittels einer Befestigungseinrichtung befestigbar ist. Während des Grillens kann sich beispielsweise Flüssigkeit aus dem Grillgut zu Ablagerungen an der Unterseite der Grillgutauflageflächen des Grillsystems umwandeln. Entlang den Ablagerungen kann die Flüssigkeit aus dem Grillgut in die Glut abtropfen. Deshalb sollten solche Ablagerungen regelmäßig entfernt werden. Diese Maßnahme kann die Stabilität des Grillsystems gefährden, weshalb es empfehlenswert ist, das Grillsystem am Grillrost mittels einer Befestigungseinrichtung zu befestigen.

### Kurze Beschreibung der Zeichnung

Nachfolgend werden Ausführungsbeispiele der Erfindung anhand einer Zeichnung näher erläutert. Darin zeigen in schematischen, teilweise stark vereinfachten Darsfellungen:
- Fig. 1: eine perspektivische Ansicht eines Ausführungsbeispiels des erfindungsgemäßen Grillsystems;
- Fig.2: eine Querschnittsansicht eines weiteren Ausführungsbeispiels des erfindungsgemäßen Grillsystems;
- Fig. 3: eine Querschnittsansicht eines weiteren Ausführungsbeispiels des erfindungsgemäßen Grillsystems; und
- Fig. 4: eine Querschnittsansicht einer Befestigung des Grillsystems am Grillrost.

### Ausführliche Beschreibung der Zeichnung

Ein Grillsystems 1 zur Auflage auf einem Grillrost 17 eines Grills weist eine erste Grillgutauflagefläche 1a und eine zweite Grillgutauffagefläche 1b auf. Des Weiteren weist das Grillsystem 1 ein erstes Stützelement 5a und ein zweites Stützelement 5b sowie einen ersten Flüssigkeitssammelbehälter 2a und einen zweiten Flüssigkeitssammelbehälter 2b auf. Ferner enthält das Grillsystem eine erste Schutzeinrichtung 3a zur Vermeidung eines Fallens von Grillgut und eine zweite Schutzeinrichtung 3b zur Vermeidung des Fallens des Grillguts.

Die erste Grillgutauflagefläche 1a und die zweite Grillgutauflagefläche 1b sind zwei Grillroste, welche miteinander verbunden sind und dachförmig einen Winkel β von 120°-170°, bevorzugt 140°-160° bilden. Bei Einbringung des Grillsystems 1 auf den Grillrost 17 des Grills mit einer waagerechten Aufsetzfläche weist die erste Grillgutauflagefläche 1a und die zweite Grillgutauflagefläche 1b jeweils einen Neigungswinkel α relativ zur Horizontalen von 5°-30°, bevorzugt 10°-20° auf. Der Grillrost der ersten Grillgutauflagefläche 1a und der zweiten Grillgutauflagefläche 1b besteht aus einem umlaufenden Rahmenstab 6 sowie einem an der Verbindungsstelle zwischen der ersten Grillgutauflagefläche 1a und der zweiten Grillgutauflagefläche 1b in Querrichtung zum Rahmenstab 6 angeordneten Stab.

Die erste Grillauflagefläche 1a und die zweite Grillauflagefläche 1b weisen des Weiteren eine Vielzahl von parallel zueinander angeordneten Stäben 6a auf. Der Abstand zwischen den einzelnen Stäben ist hierbei gering gewählt, um ein mögliches Herausragen der Kante eines Grillgutes von der Grillgutauflagefläche des Grillsystems zu vermeiden. Im Falle des Herausragens der Kante des Grillgutes von der Grillgutauflagefläche ist es möglich, dass Flüssigkeit aus dem Grillgut entlang der Kante des Grillguts in die Glut abtropft. Dies wird durch die geringe Beabstandung der benachbart zueinander angeordneten Stäbe verhindert. Alternativ zur dargestellten Ausbildung der Grillgutauflageflächen 1a, 1b in Form von parallel zueinander angeordneten Stäben können ebenfalls Blechstreifen, Lochbleche, Drahtgitter, Steckmetall oder Gusseisen mit Öffnungen bzw. andere mögliche Materialien Verwendung finden.

Das Stützelement 5a ist an einem distalen Ende der ersten Grillgutauflagefläche 1a ausgebildet und mit dieser verbunden. Das Stützelement 5a ist in der vorliegenden Ausführungsform zweiteilig ausgebildet, wobei ein erstes Teil des Stützelements 5a an einer linken Seite des distalen Endes der ersten Grillgutauflagefläche 1a und ein zweites Teil des Stützelements 5a an einer rechten Seite des distalen Endes der ersten Grillgutauflagefläche 1a ausgebildet ist. Die Verbindung zwischen der ersten Grillgutauflagefläche 1a und dem ersten Stützelement 5a kann beispielsweise durch Verlängerung und Biegung des Rahmenstabs 6 oder eine Schweißverbindung ausgebildet sein. Die jeweiligen Enden der Teile des ersten Stützelements 5a weisen eine rechtwinkelige Biegung auf, wobei ein relativ zum Grillrost waagerechter Abschnitt als Auflagefläche und ein senkrechter Abschnitt als Stützelement dient. Die jeweiligen Enden der Teile des ersten Stützelements 5a können beispielsweise aus Verpackungsgründen auch eine andere geeignete Form aufweisen.

Das Stützelement 5b ist an einem distalen Ende der zweiten Grillgutauflagefläche 1b ausgebildet und mit dieser verbunden. Das Stützelement 5b ist in der vorliegenden Ausführungsform zweiteilig ausgebildet, wobei ein erstes Teil des Stützelements 5b an einer linken Seite des distalen Endes der zweiten Grillgutauflagefläche 1b und ein zweites Teil des Stützelements 5b an einer rechten Seite des distalen Endes der ersten Grillgutauflagefläche 1b ausgebildet ist. Die Verbindung zwischen der zweiten Grillgutauflagefläche 1b und dem zweiten Stützelement 5b kann beispielsweise durch Verlängerung und Biegung des Rahmenstabs 6 oder eine Schweißverbindung ausgebildet sein. Die jeweiligen Enden der Teile des zweiten Stützelements 5b weisen eine rechtwinkelige Biegung auf, wobei ein relativ zum Grill waagerechter Abschnitt als Auflagefläche und ein senkrechter Abschnitt als Stützelement dient. Die jeweiligen Enden der Teile des ersten Stützelements 5a können beispielsweise aus Verpackungsgründen auch eine andere geeignete Form aufweisen.

Der erste Flüssigkeitssammelbehälter 2a, welcher zur Aufnahme von Flüssigkeit, die über die erste Grillgutauflagefläche 1a abgeschieden wird, dient, weist eine rechteckige Form auf. Der Flüssigkeitssammelbehälter 2a weist insbesondere einen Boden und vier Seitenwände auf. Die Länge des ersten Flüssigkeitssammelbehälters 2a ist derart gewählt, dass dieser geringfügig länger als die erste Grillgutauflagefläche 1a ist. Dadurch kann von der ersten Grillgutauflagefläche 1a abtropfende Flüssigkeit von dem ersten Flüssigkeitssammelbehälter 2a sicher aufgefangen werden. Der erste Flüssigkeitssammelbehälter 2a ist vorzugsweise aus Metall ausgebildet.

Der zweite Flüssigkeitssammelbehälter 2b, welcher zur Aufnahme von Flüssigkeit, die über die zweite Grillgutauflagefläche 1b abgeschieden wird, dient, weist eine rechteckige Form auf. Der zweite Flüssigkeitssammelbehälter 2b weist insbesondere einen Boden und vier Seitenwände auf. Die Länge des zweiten Flüssigkeitssammelbehälters 2b ist derart gewählt, dass dieser geringfügig länger als die zweite Grillgutauflagefläche 1b ist. Dadurch kann von der zweiten Grillgutauflagefläche 1b abtropfende Flüssigkeit von dem zweiten Flüssigkeitssammelbehälter 2b sicher aufgefangen werden. Der zweite Flüssigkeitssammelbehälter 2b ist vorzugsweise aus Metall ausgebildet.

Die Schutzeinrichtung 3a zur Vermeidung eines Fallens von Grillgut ist vorzugsweise an einem distalen Ende sowie einem seitlichen Abschnitt der ersten Grillgutauflagefläche 1a angeordnet. Die Schutzeinrichtung 3a besteht aus einem Blech, welches relativ zum Grillrost bzw. der Auflagefläche des Grillsystems senkrecht ausgebildet ist. Das Blech ist auf der gesamten Länge des distalen Endes der ersten Grillgutauflagefläche 1a sowie einem Teilabschnitt der beiden Seitenflanken der ersten Grillgutauflagefläche 1a ausgebildet. Das Blech der Schutzeinrichtung 3a ist einteilig ausgebildet, kann alternativ jedoch ebenfalls mehrteilig ausgebildet sein. Anstelle der Verwendung eines Blechs kann die Schutzeinrichtung 3a alternativ ebenfalls in Form eines Stabs, eines Drahtgitters oder anderer geeigneter Gegenstände ausgebildet sein.

Die Schutzeinrichtung 3b zur Vermeidung eines Fallens von Grillgut ist vorzugsweise an einem distalen Ende sowie einem seitlichen Abschnitt der zweiten Grillgutauflagefläche 1b angeordnet. Die Schutzeinrichtung 3b besteht hierbei aus einem Blech, welches relativ zum Grillrost bzw. der Auflagefläche des Grillsystems senkrecht ausgebildet ist. Das Blech ist auf der gesamten Länge des distalen Endes der zweiten Grillgutauflagefläche 1b sowie einem Teilabschnitt der beiden Seitenflanken der zweiten Griligutauflagefläche 1b ausgebildet. Das Blech der Schutzeinrichtung 3b ist einteilig ausgebildet, kann alternativ jedoch ebenfalls mehrteilig ausgebildet sein. Anstelle der Verwendung eines Blechs kann die Schutzeinrichtung 3b alternativ ebenfalls in Form eines Stabs, eines Drahtgitters oder anderer geeigneter Gegenstände ausgebildet sein.

Die Stützelemente 5a, 5b sind jeweils an distalen Enden der ersten und zweiten Grillgutauflagefläche 1a, 1b angeordnet und dienen der Erhöhung bzw. Auflage der Grillroste der ersten und zweiten Grillgutauflageflächen 1a, 1b, so dass ein Ablaufen von Flüssigkeit des Grillgutes entlang der jeweiligen Stäbe der ersten und zweiten Grillgutaufiagefläche 1a, 1b und ein anschließendes Abtropfen der Flüssigkeit des Grillgutes an den jeweiligen distalen Enden der ersten und zweiten Grillgutauflagefläche 1a, 1b in die jeweiligen Flüssigkeitssammelbehälter ermöglicht wird. Die Verbindung zwischen den jeweiligen Stützelementen 5a, 5b und den jeweiligen Flüssigkeitssammelbehältern 2a, 2b ist eine lösbare Verbindung, da die beiden Grillgutauflagefläche 1a, 1b mit den daran befestigten Stützelementen 5a, 5b lediglich in die jeweiligen Flüssigkeitssammelbehälter 2a, 2b gestellt werden. Alternativ kann die Verbindung zwischen den jeweiligen Stützelementen 5a, 5b und den jeweiligen Flüssigkeitssammelbehältern 2a, 2b als Festverbindung ausgebildet sein. Als Festverbindung kommt beispielsweise eine Schweißverbindung in Betracht.

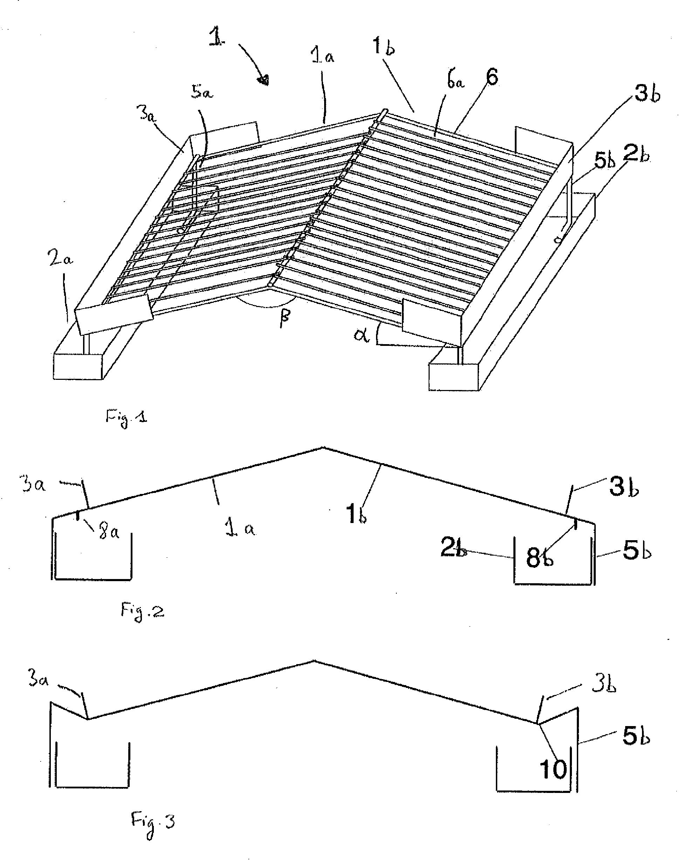

Figur 2 zeigt eine Querschnittsansicht einer weiteren Ausführungsform der vorliegenden Erfindung. Im Gegensatz zur mit Bezug auf Figur 1 dargelegten Ausführungsform weist die vorliegende Ausführungsform einen Flüssigkeitsabscheider zum Abtropfen von Flüssigkeit in den jeweiligen Flüssigkeitssammelbehälter 2a, 2b auf, wobei der Flüssigkeitsabscheider durch einen Vorsprung 8a, 8b an einer Unterseite der jeweiligen Grillgutauflagefläche 1a, 1b ausgebildet ist. Des Weiteren sind die Stützelemente 5a, 5b derart ausgebildet, dass diese die jeweilige Grillgutauflagefläche 1a, 1b abstützen und mit dem Grillrost 17 des Grills Kontakt bilden. Die Flüssigkeitssammelbehälter 2a, 2b sind neben den Stützelementen 5a, 5b auf dem Grillrost 17 des Grills angeordnet. Alternativ kann das Stützelement 5a, 5b ebenfalls auf einer gesamten Länge der distalen Enden der jeweiligen Grillgutauflageflächen 1a, 1b ausgebildet werden und somit jeweilige Seitenwände der Flüssigkeitssammelbehälter 2a, 2b ersetzen. Der Vorsprung 8a, 8b an der Unterseite der jeweiligen Grillgutauflagefläche 1a, 1b ist derart positioniert, dass ein sicheres Abtropfen von Flüssigkeit des Grillgutes in die jeweiligen Flüssigkeitssammelbehälter 2a, 2b ermöglicht wird.

Figur 3 zeigt eine Querschnittsansicht einer weiteren Ausführungsform der vorliegenden Erfindung. Die erste und zweite Grillgutauflagefläche 1a, 1b weisen jeweils einen Flüssigkeitsabscheider zum Abtropfen von Flüssigkeit in jeweilige Flüssigkeitssammelbehälter 2a, 2b auf, wobei der Flüssigkeitsabscheider an einer Verbindungsstelle 10 zwischen Grillgutauflagefläche 1a, 1b und Stützelement 5a, 5b durch Ausbilden des Stützelements 5a, 5b mit einer Neigung relativ zur Horizontalen vorgesehen ist. Dadurch kann die Flüssigkeit aus dem Grillgut an der Verbindungsstelle zwischen Grillgutauflagefläche 1a, 1b und Stützelement 5a, 5b in die Flüssigkeitssammelbehälter 2a, 2b abtropfen.

Die Grillgutauflagefläche 1a und das mit dieser verbundene Stützelement 5a weisen somit eine V-Form auf, an deren unterstem Punkt die Verbindungsstelle zwischen Grillgutauflagefläche 1a und Stützelement 5a liegt. Die Grillgutauflagefläche 1b und das mit dieser verbundene Stützelement 5b weisen ebenfalls eine V-Form auf, an deren unterstem Punkt die Verbindungsstelle zwischen Grillgutauflagefläche 1b und Stützelement 5b liegt.

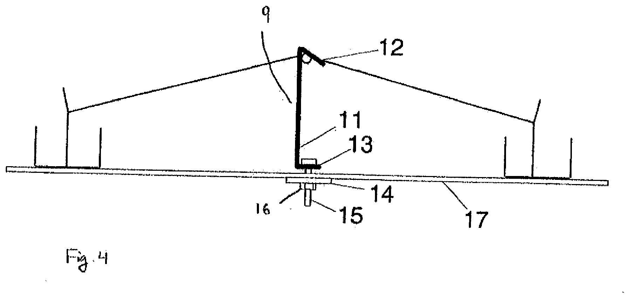

Figur 4 zeigt eine Querschnittsansicht einer Befestigungseinrichtung 9 zum Befestigen des Grillsystems 1 am Grillrost 17 am Beispiel der in Figur 1 gezeigten Ausführungsform. Die Befestigungseinrichtung 9 weist einen Blechstreifen 11 auf, welcher an dessen oberem Ende einen Haken 12 aufweist und dessen unteres Ende in Form einer rechtwinkeligen Biegung 13 ausgebildet ist. Der Haken 12 wird an der Verbindungsstelle zwischen der ersten Grillgutauflagefläche 1a und der zweiten Grillgutauflagefläche 1b eingehängt bzw. verankert. Die rechtwinkelige Biegung 13 des Blechstreifens 11 weist eine Perforierung auf, durch welche ein Befestigungsmittel eingeführt und durch den Grillrost 17 gesteckt sowie an einer Unterseite des Grillrost 17 mittels einer Unterlegscheibe 14 und einem Bolzen 15 sowie einer Mutter 16 fixiert wird. Alternativ kann ebenfalls ein anderes geeignetes Befestigungsmittel vorgesehen sein. Anstatt dem Blechstreifen 11 kann ebenfalls ein Stab mit Haken und Biegung vorgesehen sein. Die Unterlegscheibe 14, der Bolzen 15 und die Mutter 16 können beispielsweise durch eine Schelle ersetzt werden. Die Schelle verbindet dann Biegung 13 und Grillrost 17. Somit wird das Grillsystem, einschließlich der Flüssigkeitssammelbehälter 2a, 2b fest am Grillrost 17 fixiert.

### Liste der Bezugszeichen

- 1: Grillsystem
- 1a: erste Grillgutauflagefläche
- 1b: zweite Grillgutauflagefläche
- 2a: erster Flüssigkeitssammelbehälter
- 2b: zweiter Flüssigkeitssammelbehälter
- 3a, 3b: Schutzeinrichtung
- 5a: erstes Stützelement
- 5b: zweites Stützelement
- 6: Rahmenstab
- 8a, 8b: Vorsprung
- 9: Befestigungseinrichtung
- 10: Verbindungsstelle
- 11: Blechstreifen
- 12: Haken
- 13: Biegung
- 14: Unterlegscheibe
- 15: Bolzen
- 16: Mutter
- 17: Grillrost

## Patentansprüche

1. Grillsystem (1), welches geeignet ist, auf einen waagerechten Grillrost (17) eines Grills aufgelegt zu werden, mit:
einer ersten und einer zweiten Grillgutauflagefläche (1a, 1b), wobei die erste Grillgutauflagefläche (1a) und die zweite Grillgutauflagefläche (1b) keine Rinne aufweisen und mit einem Winkel (β) von 120°-170° miteinander verbunden sind, und wobei die Grillgutauflageflächen (1a, 1b) mit zumindest jeweils einem Stützelement (5a, 5b) verbunden sind, welche geeignet sind, die Grillgutauflageflächen (1a, 1b) abzustützen, sowie die Grillgutauflageflächen (1a, 1b) bei Auflegung des Grillsystems (1) auf den waagrechten Grillrost (17) jeweils eine Neigung (α) von 5°-30° relativ zur Horizontalen aufweisen;
einem ersten Flüssigkeitssammelbehälter (2a) zur Aufnahme von Flüssigkeit, die über die erste Grillgutauflagefläche (1a) abgeschieden wird;
einem zweiten Flüssigkeitssammelbehälter (2b) zur Aufnahme von Flüssigkeit, die über die zweite Grillgutauflagefläche (1b) abgeschieden wird; wobei das zumindest jeweils eine Stützelement (5a, 5b) die Grillgutauflageflächen (1a, 1b) abstützt und den erforderlichen Platz zur Anordnung der Flüssigkeitssammelbehälter (2a, 2b) unter den Grillgutauflageflächen (1a, 1b) schafft.

2. Grillsystem nach Anspruch 1, wobei die Auflage auf dem Grillrost (17) durch den ersten und zweiten Flüssigkeitssammelbehälter (2a, 2b) erfolgt.

3. Grillsystem nach Anspruch 1, wobei die Auflage auf dem Grillrost (17) durch das zumindest jeweils eine Stützelement (5a, 5b) sowie den ersten und zweiten Flüssigkeitssammelbehälter (2a, 2b) erfolgt.

4. Grillsystem (1) nach Anspruch 1 oder 2, wobei das zumindest jeweils eine Stützelement (5a, 5b) in dem jeweiligen Flüssigkeitssammelbehälter (2a, 2b) angeordnet ist.

5. Grillsystem nach Anspruch 4, wobei das zumindest jeweils eine Stützelement (5a, 5b) in dem jeweiligen Flüssigkeitssammelbehälter (2a, 2b) lösbar angeordnet ist.

6. Grillsystem (1) nach Anspruch 1, wobei die erste und zweite Grillgutauflagefläche (1a, 1b) jeweils einen Flüssigkeitsabscheider zum Abtropfen von Flüssigkeit in den jeweiligen Flüssigkeitssammelbehälter (2a, 2b) aufweisen, wobei der Flüssigkeitsabscheider durch einen Vorsprung (8a, 8b) an einer Unterseite der jeweiligen Grillgutauflagefläche (1a, 1b) ausgebildet ist.

7. Grillsystem (1) nach Anspruch 1 oder 5, wobei die erste und zweite Grillgutauflagefläche (1a, 1b) jeweils einen Flüssigkeitsabscheider zum Abtropfen von Flüssigkeit in den jeweiligen Flüssigkeitssammelbehälter (2a, 2b) aufweisen, wobei der Flüssigkeitsabscheider an der Verbindungsstelle zwischen Grillgutauflagefläche (1a, 1b) und Stützelement (5a, 5b) durch Vorsehen des Stützelementes (5a, 5b) mit einer Neigung relativ zur Horizontalen ausgebildet ist.

8. Grillsystem (1) nach einem der vorhergehenden Ansprüche, wobei die erste und zweite Grillgutauflagefläche (1a, 1b) jeweils an einem distalen Ende sowie einem seitlichen Abschnitt eine Schutzeinrichtung (3a, 3b) zur Vermeidung eines Fallens von Grillgut aufweisen.

9. Grillsystem (1) nach einem der vorhergehenden Ansprüche, wobei das Grillsystem (1) am Grillrost (17) mittels einer Befestigungseinrichtung (9) befestigbar ist.

## Claims

1. Grill system (1) suitable for laying on a horizontal cooking grate (17) of a grill, comprising:
a first and a second grilling material laying surface (1a, 1b), the first grilling material laying surface (1a) and the second grilling material laying surface (1b) not having a gutter, and being interconnected at an angle (β) of 120° - 170°, and the grilling material laying surfaces (1a, 1b) each being connected to at least one support element (5a, 5b), said elements being suitable for supporting the grilling material laying surfaces (1a, 1b), and the grilling material laying surfaces (1a, 1b) each being at an inclination (α) of 5° - 30° to the horizontal when the grill system (1) is laid on the horizontal cooking grate (17);
a first liquid collection container (2a) for receiving liquid deposited via the first grilling material laying surface (1a) ;
a second liquid collection container (2b) for receiving liquid deposited via the second grilling material laying surface (1b); wherein
the at least one support element (5a, 5b) braces each of the grilling material laying surfaces (1a, 1b) and
provides the required space for arranging the liquid collection container (2a, 2b) below the grilling material laying surfaces (1a, 1b).

2. Grill system according to claim 1, wherein the laying on the cooking grate (17) takes place by way of the first and second liquid collection container (2a, 2b).

3. Grill system according to claim 1, wherein the laying on the cooking grate (17) takes place by way of the at least one support element (5a, 5b) in each case and the first and second liquid collection containers (2a, 2b).

4. Grill system (1) according to either claim 1 or claim 2, wherein the at least one support element (5a, 5b) in each case is arranged in the associated liquid collection container (2a, 2b).

5. Grill system according to claim 4, wherein the at least one support element (5a, 5b) in each case is arranged detachably in the associated liquid collection container (2a, 2b).

6. Grill system (1) according to claim 1, wherein the first and the second grilling material laying surface (1a, 1b) each comprise a liquid separator for dripping liquid into the associated liquid collection container (2a, 2b), the liquid separator being formed by a projection (8a, 8b) on an underside of the associated grilling material laying surface (1a, 1b).

7. Grill system (1) according to either claim 1 or claim 5, wherein the first and the second grilling material laying surface (1a, 1b) each comprise a liquid separator for dripping liquid into the associated liquid collection container (2a, 2b), the liquid separator being formed at the connection point between the grilling material laying surface (1a, 1b) and the support element (5a, 5b) by providing the support element (5a, 5b) at an inclination to the horizontal.

8. Grill system (1) according to any of the preceding claims, wherein the first and second grilling material laying surface (1a, 1b) each have a protection means (3a, 3b) at a distal end and at a side portion for preventing grilling material from falling.

9. Grill system (1) according to any of the preceding claims, wherein the grill system (1) can be fixed to the cooking grate (17) by means of a fixing device (9).

## Revendications

1. Système de grill (1) adapté à être appliqué sur une grille de barbecue horizontale (17) d'un grill, comportant :
une première et une seconde surface d'application de produit de grill (1a, 1b), la première surface d'application de produit de grill (1a) et la seconde surface d'application de produit de grill (1b) ne présentant aucune rigole et étant reliées l'une à l'autre selon un angle (β) de 120 à 170°, et les surfaces d'application de produit de grill (1a, 1b) étant reliées chacune à au moins un élément de support (5a, 5b) qui sont adaptés à supporter les surfaces d'application de produit de grill (1a, 1b), et les surfaces d'application de produit de grill (1a, 1b), lors de l'application du système de grill (1) sur la grille de barbecue horizontale (17), présentent chacune une inclinaison (α) de 5° à 30° par rapport à l'horizontale ;
un premier récipient collecteur de liquide (2a) pour recevoir le liquide qui est séparé sur la première surface d'application de produit de grill (1a) ;
un second récipient collecteur de liquide (2b) pour recevoir le liquide qui est séparé sur la seconde surface d'application de produit de grill (1b) ;
dans lequel au moins chacun des éléments de support (5a, 5b) supporte les surfaces d'application de produit de grill (1a, 1b) et créent la place nécessaire pour disposer le récipient collecteur de liquide (2a, 2b) sous les surfaces d'application de produit de grill (1a, 1b).

2. Système de grill selon la revendication 1, dans lequel l'application sur la grille de barbecue (17) se fait par le premier et le second récipient collecteur de liquide (2a, 2b).

3. Système de grill selon la revendication 1, dans lequel l'application sur la grille de barbecue (17) se fait par au moins chacun des éléments de support (5a, 5b) et le premier et le second récipient collecteur de liquide (2a, 2b).

4. Système de grill (1) selon la revendication 1 ou 2, dans lequel au moins chacun des éléments de support (5a, 5b) est disposé dans le récipient collecteur de liquide respectif (2a, 2b).

5. Système de grill selon la revendication 4, dans lequel au moins chacun des éléments de support de support (5a, 5b) est disposé de manière amovible dans le récipient collecteur de liquide (2a, 2b) respectif.

6. Système de grill (i) selon la revendication 1, dans lequel la première et la seconde surface d'application de produit de grill (1a, 1b) présentent chacune un séparateur de liquide pour faire s'égoutter le liquide dans le récipient collecteur de liquide (2a, 2b) respectif, le séparateur de liquide étant configuré par une saillie (8a, 8b) au niveau d'une face inférieure de la surface d'application de produit de grill (1a, 1b) respective.

7. Système de grill (1) selon la revendication 1 ou 5, dans lequel la première et la seconde surface d'application de produit de grill (1a, 1b) présentent chacune un séparateur de liquide pour faire s'égoutter le liquide dans le récipient collecteur de liquide (2a, 2b) respectif, le séparateur de liquide étant configuré au niveau du point de jonction entre la surface d'application de produit de grill (1a, 1b) et l'élément de support (5a, 5b) en prévoyant l'élément de support (5a, 5b) avec une inclinaison par rapport à l'horizontale.

8. Système de grill (1) selon une des revendications précédentes, dans lequel la première et la seconde surface d'application de produit de grill (1a, 1b) présentent chacune au niveau d'une extrémité distale et d'un segment latéral un dispositif de protection (3a, 3b) pour éviter une chute du produit de grill.

9. Système de grill (1) selon une des revendications précédentes, dans lequel le système de grill (1) peut être fixé à la grille de barbecue (17) à l'aide d'un moyen de fixation (9).
